# EUROPÄISCHE PATENTSCHRIFT

(11) **EP 3 545 274 B1**
(45) Veröffentlichungstag und Bekanntmachung des Hinweises auf die Patenterteilung: **06.01.2021**
(21) Anmeldenummer: 17811856.8
(22) Anmeldetag: 09.11.2017
(51) Int. Cl.: G01K 11/00, G08B 17/00

(54) **OLFAKTORISCHE SIGNALGEBUNG NACH ÜBERHITZUNG IN TECHNISCHEN EINRICHTUNGEN MITTELS PYROLYSE VON DUFTSTOFFDERIVATEN**
OLFACTORY SIGNALING AFTER OVERHEATING IN TECHNICAL EQUIPMENT BY PYROLYSIS OF ODOROUS SUBSTANCES DERIVATIVES
SIGNALISATION OLFACTIVE APRÈS SURCHAUFFE DANS DES ÉQUIPEMENT TECHNIQUE PAR PYROLYSE DE DÉRIVÉS DE SUBSTANCES ODORANTES

(30) Priorität: 19.12.2016 DE 102016225419
(43) Veröffentlichungstag der Anmeldung: 02.10.2019
(73) Patentinhaber: Technische Universität München, 80333 München (DE)
(72) Erfinder: FISCHER, Thilo, 85737 Ismaning (DE)
(74) Vertreter: Isarpatent
(86) Internationale Anmeldenummer: PCT/EP2017/078702
(87) Internationale Veröffentlichungsnummer: WO 2018/114124

(56) Entgegenhaltungen:
- WO-A1-2015/168243
- WO-A2-99/40078
- JP-A- H09 185 789
- US-A1- 2013 269 417
- SALAHEDDIN SADEGHIFARD ET AL: "A new embedded E-nose system in smoke detection", COMPUTER AND KNOWLEDGE ENGINEERING (ICCKE), 2011 1ST INTERNATIONAL ECONFERENCE ON, IEEE, 13. Oktober 2011 (2011-10-13), Seiten 18-21, XP032310719, DOI: 10.1109/ICCKE.2011.6413317 ISBN: 978-1-4673-5712-8

## Beschreibung

Die vorliegende Erfindung offenbart eine olfaktorische Signalgebung nach Überhitzung in technischen Einrichtungen mittels Pyrolyse von Duftstoffderivaten.

### Stand der Technik

Elektrische Anlagen sind durch Stromfluss generell einer Erwärmung bei Betrieb ausgesetzt, die je nach Stromfluss und elektrischem Widerstand und Wärmeabgabe verschiedene Bauteile verschieden stark betrifft. Neben entsprechenden Kühlmaßnahmen und Stromfluss-begrenzenden Maßnahmen, z.B. Sicherungen, werden daher auch Maßnahmen ergriffen, um Bauelemente oder auch die ganze Einrichtung vor Überhitzung zu schützen, die neben dem Schaden an der elektrischen Einrichtung selbst auch die Folgeschäden eines Ausfalles sowie die Brandgefahr zu verhindern suchen.

Die übliche technische Lösung zum Überhitzungsschutz besteht in dem Einbau von Platinmesswiderständen (z.B. Pt100, Pt1000), die über die Abhängigkeit des elektrischen Widerstandes von Platin von der Temperatur ("Kennlinie") eine Temperaturmessung ermöglichen und sie so als Thermosensoren bzw. "Thermofühler" einsetzbar machen. Diese werden beispielsweise eingesetzt, um eine Abschaltung bei Überhitzung zu erreichen und/oder akustische oder optische Signale bei Überhitzung zu geben.

Nicht nur in elektrische Anlagen, sondern auch an anderen durch Erhitzung gefährdeten technischen Einrichtungen werden solche Thermosensoren eingesetzt. Eine wichtige technische Einschränkung ist hierbei, das Thermosensoren zunächst nur punktuell arbeiten, und nur durch Einsatz mehrerer Thermosensoren, oder durch Messung in einem Bereich, in dem sich die Wärme zunächst verteilen muss, kann auch eine umfassendere Überwachung erreicht werden.

Es stellt damit ein technisches Problem dar, einen kompletten Schutz von technischen Einrichtungen zu erreichen, der über die punktuelle Messung zur Signalgebung mittels Thermofühlern hinausgeht.

Hierfür existieren bereits einige technische Ansätze, die teilweise auf Warnstoff-Ummantelung oder -Mikroverkapselung beruhen, und teilweise auch olfaktorische Signale benutzen:
Die JP H09185789 A von 1997 *"Abnormal Smell Sensing And Marking Device"* beschreibt beispielsweise einen Sensor, der die mit Erhitzung einhergehende Geruchsveränderung elektrischer Geräte erfasst und akustisch oder optisch signalisiert. Aus der US 2013/269417 A1 ist ein Sensormodul bekannt, welches den Geruch innerhalb des physikalischen Gehäuses eines Computergeräts überwacht.
Die JP H06123658 A von 1994 *"Detecting Apparatus Of Overheating Of Electric Equipment"* legt eine Methode offen, elektrische Einrichtungen mit einem olfaktorischen Warnsignal zu versehen, und verwendet dabei mikroverkapselte Geruchsstoffe; der Warngeruch wird dabei von einem Sensor detektiert und zu einem akustischen oder optischen Warnsignal umgesetzt.
Die GB 2301231 A von 1996 *"Thermal Olfactory Alarm For Electric Motor Winding"* offenbart eine elektrische Warnsignalgebung bei der Überhitzung von Motorspulen. Die WO 1996 010260 A1 von 1996 *"Electric Cable Having Indicating Malfunction Means Therein"* legt eine Methode offen, wie Kabel mit einem Aufmerksamkeit erregenden Material und/oder visuell reagierenden Material, z.B. einem thermochromen Material oder einem Flüssigkristall, versehen werden können, welches in kritischen Temperaturbereichen visuell und/oder physikalisch reagiert und so Überhitzung, Überlastung, Beschädigung oder Fehlfunktion anzeigen kann.
Die US 2010 0117828 A1 *"Alarm Scheme With Olfactory Alerting Component"* offenbart prinzipielle Möglichkeiten, eine olfaktorische Alarmkomponente in bisherige akustische und optische Signalsysteme zu integrieren.
Die US 2012 0298398 A1 *"Cable Comprising Indicator Material For Detecting Damage Control"* legt eine Methode offen, Kabel und Röhren durch eine Ummantelung mit einem Warnstoff gegen sonst unbemerkte mechanische Beschädigung zu schützen.
Die US 2014 0032944 A1 aus 2014 *"Early Detection Of Overheating Devices"* offenbart eine Methode, in einem Computer Überhitzung über Geruchsstoffe festzustellen, optional durch Analyse der Signale mit einem neuronalen Netz.
Die US 9250220 B2 aus 2016 *"System For Preventing Undue Bending Of Cables"* beansprucht eine Methode, bei der Kabel mit zwei Ummantelungen umgeben werden, darin enthalten jeweils ein Gas oder wenigstens eine Chemikalie, die innere Ummantelung so beschaffen, dass sie einen höheren minimalen Krümmungsradius (vor Bruch) als das zentrale Kabel und die äußere Ummantelung aufweist, und bei Unterschreitung desselben bricht und eine chemische Reaktion auslöst, bei der eine Chemiluminenzenz, eine Farbe, oder ein Geruch entsteht.
Die WO 2015/168243 A1 offenbart eine sensorgesteuerte Dunstabzugshaube. Salaheddin Sadeghifard et al., A new embedded E-nose system in smoke detection", Computer and knowledge engineering (ICCKE), 2011, 1st Int. Econf. ON, IEEE, S. 18-21, DOI 10.1109/ICCKE.2011.6413317 beschreiben eine elektronische Nase zur Rauchdetektion.

In der WO 99/40078 A2 ist ein Verfahren zur Herstellung von Sotolon offenbart.

Ein technischer Nachteil der olfaktorischen Warnmethoden, bei denen zuvor aufgebrachte Warnstoffe ummantelt oder mikroverkapselt sind, ist es, dass die Bauteile vorher entsprechend angefertigt oder präpariert werden müssen.

Eine flächendeckende Dotierung einer technischen Anlage nach deren Installation mit bei Erhitzung aktiv werdenden Duftstoffen ist daher wünschenswert. Eine solche Methode würde eine besondere, neue technische Möglichkeit darstellen, einen kompletten Schutz der Einrichtung zu erreichen.

Diese ist aber einerseits mit der prinzipiellen Flüchtigkeit von Duftstoffen auch unter ihrem Siedepunkt konfrontiert, aber andererseits auch mit der daher üblicherweise verwendeten, generell technisch notwendigen Umhüllung der Duftstoffe, selbst bei Mikroverkapselung, kaum verträglich.

Es besteht daher ein Bedarf an einem Verfahren zum Versehen einer technischen Einrichtung mit einem Warnsignal gegenüber Erhitzung, bei dem die oben genannten Probleme nicht auftreten.

### Zusammenfassung der Erfindung

Die Erfinder haben herausgefunden, dass beim Aufbringen oder Einbringen von pyrolysierbaren Duftstoffderivaten auf oder in eine technische Einrichtung oder einen Bestandteil davon ein entsprechendes Warnsignal bei Erhitzung freigesetzt werden kann, ohne dass der Duftstoff selbst zuvor verdampft.

Die technische Lösung, prinzipiell flüchtige Duftstoffe flächig in einer technischen Einrichtung zu verteilen, ohne dass diese durch Verdunstung mit der Zeit verloren gehen, besteht in der Verwendung chemisch gebundener Duftstoffe, die erst bei erhöhten Temperaturen, also über Raumtemperatur, z.B. von mehr als 50°C, z.B. 80°C oder mehr, 100°C oder mehr, 110°C oder mehr, 120°C oder mehr, in einer chemischen Reaktion zerfallen, also pyrolysieren. Dies kann vor allem durch den Einsatz von Duftstoffglukosiden erreicht werden, ist aber prinzipiell nicht auf diese beschränkt, sondern kann auch mit anderen Duftstoffderivaten erreicht werden. Die Pyrolyse von Stoffen geschieht hierbei üblicherweise im Gegensatz zu der durch die August'sche Dampfdruckformel beschriebene Verdunstung nicht über einen weiten Temperaturbereich, sondern in einem engen.

In einem ersten Aspekt betrifft die vorliegende Erfindung ein Verfahren zum Versehen einer technischen Einrichtung mit einem Warnsignal gegenüber Erhitzung, wobei ein pyrolysierbares Duftstoffderivat auf die technische Einrichtung oder Bestandteile davon aufgebracht oder eingebracht wird.

Weiterhin offenbart ist die Verwendung eines Kits, umfassend eine Lösung, ein Spray, ein Aerosol, ein Pulver oder eine auftragbare Folie, welches oder welche ein pyrolysierbares Duftstoffderivat umfasst, bevorzugt wobei das pyrolysierbare Duftstoffderivat ausgewählt ist aus der Gruppe, bestehend aus einem Glykosid, N-Glykosid, Thioglykosid, Ester, Thioester, Ether, Thioether, Amid, Acetal, Halbacetal oder Carbamat, bevorzugt wobei das pyrolysierbare Duftstoffderivat ausgewählt ist aus Mono- und/oder Oligo-Glykosiden, weiter bevorzugt Glukosiden, insbesondere wobei das pyrolysierbare Duftstoffderivat Sotolonglukosid umfasst; und optional eine Geruchsprobe umfassend den zum pyrolysierbaren Duftstoffderivat entsprechenden Duftstoff in einem erfindungsgemäßen Verfahren.

Ebenfalls offenbart ist Sotolonglukosid, insbesondere Sotolon-β-D-glukosid der allgemeinen chemischen Formel I, welches bisher nicht synthetisch zugänglich war.

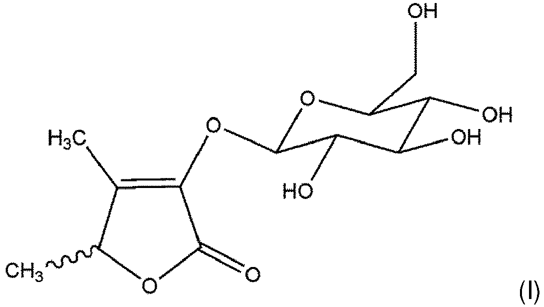

Weitere Aspekte der vorliegenden Erfindung sind den abhängigen Ansprüchen und der detaillierten Beschreibung zu entnehmen.

### Detaillierte Beschreibung der Erfindung

### Definitionen

So nicht anderweitig definiert haben hierin verwendete technische und wissenschaftliche Ausdrücke dieselbe Bedeutung, wie sie von einem Fachmann auf dem Fachgebiet der Erfindung gemeinhin verstanden wird.

Ein Duftstoff ist hierbei ein den Geruchssinn anregender, chemischer Stoff, insbesondere ein den Geruchssinn eines Wirbeltiers, bevorzugt eines Menschen, anregender, chemischer Stoff, und/oder ein chemischer Stoff, der durch einen olfaktorischen Sensor detektiert werden kann. Ein olfaktorischer Sensor ist ein Sensor, der eine Detektion eines Stoffs derart vornehmen kann, dass ein Stoff detektiert wird, den eine Vielzahl von Menschen als einen Duftstoff wahrnimmt. Als olfaktorische Sensoren kommen neben den biologischen olfaktorischen Sensoren wie denen des Menschen beispielsweise auch elektronische Nasen oder andere technische Einrichtungen in Frage.

Ein Derivat eines Duftstoffs ist ein Stoff, der selbst kein Duftstoff ist, oder eine geringere oder andere Wahrnehmungsqualtät besitzt, aus dem jedoch durch eine Abspaltung, insbesondere Abspaltung eines Molekülbestandteils des Duftstoffderivats, ein Duftstoff erzeugt werden kann.

Die vorliegende Erfindung betrifft in einem ersten Aspekt ein Verfahren zum Versehen einer technischen Einrichtung mit einem Warnsignal gegenüber Erhitzung, wobei ein pyrolysierbares Duftstoffderivat auf die technische Einrichtung oder Bestandteile davon aufgebracht oder eingebracht wird. Auch können mehrere Duftstoffderivate aufgebracht werden, welche bevorzugt zu unterschiedlichen Gerüchen führen können, sodass verschiedene Bediener der technischen Einrichtung zumindest einen Duftstoff nach Pyrolyse erkennen können, etwa wenn sie bestimmte Duftstoffe nicht wahrnehmen können.

Das Warnsignal, das eine Warnung vor einem Erhitzen, insbesondere einem zu starken Erhitzen, von einer technischen Einrichtung darstellt, und welches insbesondere abgegeben wird, wenn eine Erhitzung zu einer Temperatur erfolgt, die die technische Einrichtung im Normalfall nicht erzielen sollte, wird hierbei durch Freisetzung des Duftstoffes nach Pyrolyse erzeugt, welches somit olfaktorisch wahrnehmbar ist, also beispielsweise durch einen Nutzer oder eine Aufsichtsperson und/oder einen olfaktorischen Sensor.

Das Aufbringen oder Einbringen kann auf verschiedene Weise erfolgen, sowohl auf oder in die technische Einrichtung wie auch Bestandteile davon, ggf. auch schon vor einem Zusammenbau der technischen Einrichtung, etwa von Akkumulatoren, beispielsweise in Handys, Laptops oder Tablets, oder vor der Installation eines Bauteils, ggf. auch eines Ersatzbauteils.

Das pyrolysierbare Duftstoffderivat ist hierbei insbesondere ein hitze-instabiles, pyrolysierbares Duftstoffderivat, das auf, beispielsweise durch Überhitzung gefährdete, technische Einrichtungen aufgebracht werden kann. Gemäß bestimmten Ausführungsformen ist das pyrolysierbare Duftstoffderivat ab einer Temperatur von mehr als 120°C, beispielsweise 130°C oder mehr, bevorzugt 140°C oder mehr, weiter bevorzugt 150°C oder mehr, noch weiter bevorzugt 160°C oder mehr, z.B. 160°C bis 240°C, pyrolysierbar, und insbesondere somit auch bei diesen Temperaturen nicht mehr stabil, sodass es zerfällt und den Duftstoff des Duftstoffderivats abgibt. Gemäß bestimmten Ausführungsformen ist das pyrolysierbare Duftstoffderivat bei einer Temperatur von 250°C oder weniger durch Pyrolyse zerfallen, bevorzugt 240°C oder weniger.

Gemäß bestimmten Ausführungsformen ist das pyrolysierbare Duftstoffderivat ausgewählt aus der Gruppe, bestehend aus Mono- und/oder Oligosacchariden, Estern, Thioestern, Ethern, Thioethern, Amiden, Acetalen, Halbacetalen und Carbamaten und/oder Derivaten davon, bevorzugt einem Glykosid, N-Glykosid, Thioglykosid, Ester, Thioester, Ether, Thioether, Amid, Acetal, Halbacetal oder Carbamat, bevorzugt wobei das pyrolysierbare Duftstoffderivat ausgewählt ist aus Mono- und/oder Oligo-Glykosiden und/oder Derivaten davon, weiter bevorzugt Glukosiden und/oder Derivaten davon, noch weiter bevorzugt Glukosiden, insbesondere wobei das pyrolysierbare Duftstoffderivat Sotolonglukosid umfasst. Als derivatisierende Moleküleinheit im Duftstoffderivat kommen somit also beispielsweise Zucker bzw. Saccharide oder Derivate davon wie etwa Glukose, Galaktose, Fructose, Mannose, etc., etwa zur Bildung von Glykosiden, N-Glykosiden, Thioglykosiden, oder Verbindungen zur Bildung von Estern, Thioestern, Ethern, Thioethern, Amiden, Acetalen, Halbacetalen oder Carbamaten, wie Carbonsäuren, etc., in Frage. Als Saccharide kommen beispielsweise auch komplexere Saccharide, z.B. Glykoside, z.B. Mono- und/oder Oligosaccharide wie Mono- oder Oligoglykoside, und auch Mono- und/oder Oligomere anderer Zucker als Glukose, wie auch Derivate von Zuckern bzw. Sacchariden wie Desoxyzucker, Zuckersäuren, Zuckeralkohole, auch in komplexeren Zuckern, z.B. Glykosiden, in Frage. Auch können als derivatisierende Moleküleinheit organische und/oder anorganische Ester, nichtglykosidische Halbacetale und Acetale, z.B. der Glykoside, und/oder Ether In Frage kommen. Als Derivate von Sacchariden (Mono- wie auch Oligosacchariden), z.B. Glykosiden oder Glukosiden, kommen des Weiteren auch solche mit Substitutionen der Hydroxylgruppen, insbesondere mit Halogenen - insbesondere F, Cl, Br, I - und Pseudohalogenen wie -SCN, -CN, -NCO, -OCN, -NCS, N₃, Epimerisierungen von Hydroxylgruppen in den Zuckern, z.B. Glykosiden, und/oder Oxidationen von Hydroxylgruppen zu Ketonen oder zu endständigen Carboxy-Funktionen (z.B. Zuckersäuren), und/oder Komplexe mit Metallionen - vor allem solchen, die die Pyrolysetemparatur des Saccharids, z.B. Glykosids, verändern, in Frage. Die Metallionen für die Komplexe sind hierbei nicht besonders beschränkt und können beispielsweise an den Duftstoff und/oder dem derivatisierenden Bestandteil angepasst sein. So sind beispielsweise mit Glykosidresten, insbesondere Glukosidresten, und/oder Derivaten davon, eventuell auch unter Beteiligung funktioneller Gruppen des Aglycons im Glycosid bzw. Glucosid und/oder Derivat davon, Cu(II), Fe(III), Al(III) und/oder Zn(II) als Metallion denkbar, welche dann die Stabilität der Glycoside bzw. Glucoside und/oder Derivate davon und damit deren Pyrolysetemperatur beeinträchtigen können.

Die Auswahl sowohl der Duftstoffe als auch ihrer Derivate berücksichtigt hierbei insbesondere gemäß bestimmten Ausführungsformen den Anspruch einer sehr niedrigen Toxizität, indem bevorzugt Duftstoffe aus dem Lebensmittelbereich ausgewählt werden, und diese glykosidisch, insbesondere an Glukose, aber auch Galaktose, etc., gebunden werden. Gemäß bestimmten Ausführungsformen ist das pyrolysierbare Duftstoffderivat ausgewählt aus Glykosiden und/oder Derivaten davon, insbesondere Glukosiden und/oder Derivaten davon, von Sotolon, Maltol, Ethylmaltol, Furaneol, Homofuraneol, Norfuraneol, Eugenol, Terpineol, Thioterpineol, Thymol, 1-Octen-3-ol, und/oder 2-Furfurylthiol und/oder ausgewählt aus Glykosiden und/oder Derivaten davon, insbesondere Glukosiden und/oder Derivaten davon, von Raucharomen, wobei die Raucharomen bevorzugt ausgewählt sind aus Phenol, 2-Methylphenol, Hydrochinon, 2,6-Dimethoxyphenol (syn. Syringol), 2,6-Dimethoxy-4-methylphenol (syn. 4-Methylsyringol), o-, m-, und p-Kresol, 2-Methoxyphenol (Guaiacol), 2-Methoxy-4-vinylphenol, 4-Ethyl-2-methoxyphenol, 4- und 5-Methyl-2-methoxyphenol (ersteres syn. 4-Methyl-guaiacol), und/oder 2- und/oder 4-Methylphenol. Als Duftstoffe treten somit beispielsweise Sotolon, Maltol, Ethylmaltol, Furaneol, Homofuraneol, Norfuraneol, Eugenol, Terpineol, Thioterpineol, Thymol, 1-Octen-3-ol, und/oder 2-Furfurylthiol, sowie Raucharomen, z.B. Phenol, 2-Methylphenol, Hydrochinon, 2,6-Dimethoxyphenol (syn. Syringol), 2,6-Dimethoxy-4-methylphenol (syn. 4-Methylsyringol), o-, m-, und p-Kresol, 2-Methoxyphenol (Guaiacol), 2-Methoxy-4-vinylphenol, 4-Ethyl-2-methoxyphenol, 4- Methyl-2-methoxyphenol (syn. 4-Methyl-guaiacol) und 5-Methyl-2-, und/oder 2- und/oder 4-Methylphenol auf.

Gemäß bestimmten Ausführungsformen werden Duftstoffe ausgewählt, die einen sehr niedrigen Geruchsschwellenwert besitzen und/oder in der Umgebung der technischen Einrichtung normalerweise nicht zu erwarten wären. So erfüllt beispielsweise Sotolon, der Geruchsstoff des "Maggikrautes" (Liebstöckel, *Levisticum officinale),* dessen Struktur in der folgenden Formel II gezeigt ist und der einen Geruchschwellenwert von nur 0,02 ng/L Luft aufweist (König et al. 1999, J. Agric. Food Chem. 1999, 47, 3288-3291), diese Vorteile sehr gut und wurde als beispielhafte Verbindung auch in den hier gezeigten Beispielen ausgewählt und benutzt, obgleich die Erfindung nicht auf Sotolon und dessen Derivate beschränkt ist. Dies wurde insbesondere ermöglicht durch die gelungene Synthese des bisher nicht synthetisierten Stoffes Sotolonglukosid, insbesondere Sotolon-β-D-glukosid der allgemeinen chemischen Formel I.

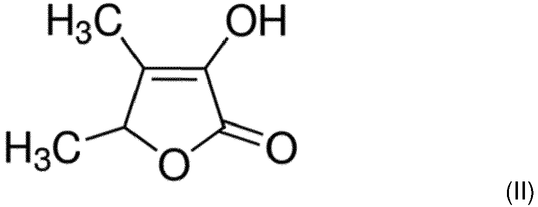

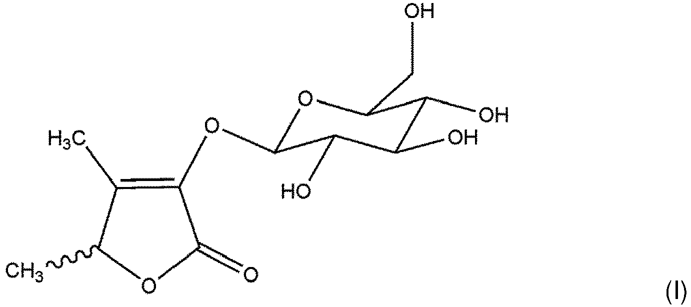

Das Sotolon besitzt hierbei einen sehr niedrigen Geruchsschwellenwert im Bereich µg/kg, abhängig vom Probanden, wobei im Glukosid als Derivat Glukose über dessen Hydroxygruppe glykosidisch gebunden ist, also über die C1-OH-Gruppe. Gemäß bestimmten Ausführungsformen ist der Duftstoff, der aus dem Duftstoffderivat freigesetzt wird, ein solcher, welcher einen sehr niedrigen Geruchsschwellenwert hat, und/oder dessen Pyrolysetemperatur der jeweils erforderlichen Überhitzungssignaltemperatur - abhängig von der technischen Einrichtung - entspricht, und/oder der in der räumlichen Umgebung der zu schützenden technischen Einrichtung normalerweise nicht zu erwarten ist. Eine erforderliche Überhitzungssignaltemperatur ist die Temperatur, unterhalb oder zumindest bei der das Warnsignal wahrnehmbar sein soll, also der Duftstoff durch Pyroylse in wahrnehmbarer Menge freigesetzt wird, wobei dies vom Duftstoff selbst und dessen Wahrnehmung, dessen Konzentration, der Pyrolyse, sowie der räumlichen Umgebung (z.B. mit oder ohne Luftzug, Raumfeuchtigkeit, etc.) abhängen kann.

Gemäß bestimmten Ausführungsformen ist der Duftstoff, der aus dem Duftstoffderivat freigesetzt wird, ein Raucharoma, wie beispielsweise aus Dunkel et al., "Nature's Chemical Signatures in Human Olfaction: A Foodborne Perspective for Future Biotechnology, Angew. Chem. Int. Ed. 2014, 53, S. 2-22; Mayr et al., "Determination of the Importance of In-Mouth Release of Volatile Phenol Glycoconjugates to the Flavor of Smoke-Tainted Wines", J. Agric. Food Chem. 2014, 62, S. 2327-2336; oder Pino, "Characterisation of volatile compounds in a smoke flavouring from rice husk", Food Chemistry 153 (2014) S. 81-86, bekannt. Diese bieten den zusätzlichen Vorteil, dass ihre Wahrnehmung direkt mit Brandgefahr assoziiert wird.

Darüber hinaus sind natürlich auch Mischungen von Duftstoffderivaten möglich, sodass beispielsweise einerseits ein Brandgeruch auftreten kann, andererseits aber auch ein ungewöhnlicher Geruch, was auch einer Lokalisierung eines überhitzten Materials und/oder Bauteils dienen kann. Durch Verwendung verschiedener Duftstoffderivate ist es zudem möglich, die überhitzte Stelle einfacher anhand eines bestimmten Geruchs zu lokalisieren. Ebenfalls kann dies im Hinblick auf eine Variation der Pyrolysetemperatur der Duftstoffderivate von Interesse sein.

Gemäß bestimmten Ausführungsformen hat das Duftstoffderivat selbst keine, eine andere, und/oder eine wesentlich geringere olfaktorische Wahrnehmung als der Duftstoff. So zeigen grob gereinigte Präparationen von Sotolonglukosid beispielsweise, die nur noch Rückstände von Sotolon aus der Synthese aufweisen, kaum noch einen Geruch nach Sotolon. Glykoside können auch beispielsweise teilweise als Bitterstoffe wahrgenommen werden, dies ist aber hierbei dann im Wesentlichen eine Geschmackswahrnehmung, entsprechend der guten Wasserlöslichkeit und der geringen Flüchtigkeit von Glykosiden; beispielsweise ist Naringin, das Glukosid des Flavonoids Neringenin, ein starker Bitterstoff und für die Bitterkeit der Grapefruit verantwortlich.

Die Menge des aufgebrachten pyrolysierbaren Duftstoffderivates kann daran angepasst werden, ob eine Erhitzung der technischen Einrichtung punktuell oder flächig zu erwarten ist, derart, dass die durch die Erhitzung im zu erwartenden Bereich freisetzbare Gesamtmenge an Duftstoff ausreichend ist, so dass in dem Raum, in dem sich die zu schützende technische Einrichtung befindet, der Geruchsschwellenwert überschritten werden kann und ein Geruchssignal ausgelöst werden kann. Eine entsprechende angepasste Verteilung kann beispielsweise erreicht werden durch entsprechende Einstellung der Konzentration des pyrolysierbaren Duftstoffderivats in einer Lösung bzw. Flüssigkeit oder in einem Aerosol oder Spray oder einer auftragbaren Folie, etwa ein Aufkleber, die oder das zur Aufbringung verwendet wird, und/oder durch gezielte und/oder mehrfache Auftragung dieser Lösung. Beispielsweise kann das Duftstoffderivat in einer Konzentration von 1 - 1000000 ppm, bevorzugt 10 - 100000 ppm, z.B. ungefähr 50000 ppm aufgetragen werden.

Gemäß bestimmten Ausführungsformen wird das pyrolysierbare Duftstoffderivat als Aerosol, Spray, in Lösung oder in Pulverform aufgebracht oder eingebracht, bevorzugt als Aerosol, Spray oder in Lösung, wobei als Lösungsmittel bevorzugt ein organisches Lösungsmittel, beispielsweise Ethanol, Ethylacetat, Methanol, Aceton, Dimethylsulfoxid, Dimethylformamid, Ethylenglykolmonomethylether, Isopropanol, oder eine Mischung davon, oder Wasser, bevorzugt ein organisches Lösungsmittel, beispielsweise Ethanol, Ethylacetat, Methanol, Aceton, Dimethylsulfoxid, Dimethylformamid, Ethylenglykolmonomethylether, Isopropanol, oder eine Mischung davon verwendet wird. Gemäß bestimmten Ausführungsformen umfasst das Lösungsmittel keine Elektrolyte.

Eine Aufbringung als Pulver bzw. Staub ist für das pyrolysierbare Duftstoffderivat auch möglich, beispielsweise wenn es entsprechende Haftkräfte aufweist und/oder derart aufgebracht wird, dass es auf der technischen Einrichtung oder einem Bestandteil davon selbst haftet, beispielsweise durch die Beschaffenheit der technischen Einrichtung oder dem Bestandteil davon.

Im Falle eines Aerosols oder eines Sprays, wie auch einer Lösung, können weitere Hilfsstoffe enthalten sein, welche üblicherweise enthalten sind, wie etwa oberflächenaktive Mittel, Treibmittel, etc. welche nicht besonders beschränkt sind und entsprechend des verwendeten Duftstoffes und/oder Duftstoffderivats angepasst werden können. Die Lösung, das Aerosol bzw. das Spray können geeignet verpackt werden.

Bei einer Auftragung in Lösung, mit einem Aerosol oder mit einem Spray kann sich gemäß bestimmten Ausführungsformen eine Trocknung nach der Auftragung anschließen.

Gemäß bestimmten Ausführungsformen wird bei einem Aufbringen mit einem organischen Lösungsmittel auf die zu schützende technische Einrichtung dieses derart ausgewählt, dass sich während des Aufbringens und einem nachfolgendem Trocknen - wobei sich die technische Einrichtung, beispielsweise eine elektrische Anlage, vorzugsweise im inaktiven Zustand befindet - keine Rückstände durch die Lösung bilden, beispielsweise Elektrolytrückstände, und bevorzugt nur noch das Duftstoffderivat nach dem Auftragen und Trocknen zurückbleibt. Entsprechend ist das Lösungsmittel gemäß bestimmten Ausführungsformen ein solches, welches einen Siedepunkt aufweist, der unterhalb der Pyrolysetemperatur des Duftstoffderivats liegt, bevorzugt unter 100°C, weiter bevorzugt unter 70°C, und/oder bei einer Temperatur von 10 bis 40°C einen Dampfdruck aufweist, dass es im Wesentlichen nach der Auftragung verdampft.

Gemäß bestimmten Ausführungsformen wird das pyrolysierbare Duftstoffderivat mit einer auftragbaren Folie, bevorzugt einem Aufkleber, optional mit einer nach Aufbringung abziehbarer Schutzfolie, aufgebracht. Die auftragbare Folie bzw. das Material des Aufklebers ist nicht besonders beschränkt und kann beispielsweise auf Basis von einem oder mehreren Polymeren und/oder Cellulose und dessen Derivaten, beispielsweise Papier hergestellt werden, wobei das Polymer und/oder die Cellulose und deren Derivate nicht besonders beschränkt sind. Die optionale abziehbare Schutzfolie ist ebenfalls nicht beschränkt und kann beispielsweise an das Material der Folie, z.B. des Aufklebers, angepasst sein. Das pyrolysierbare Duftstoffderivat kann beispielsweise auf die Folie, z.B. den Aufkleber, aufgebracht vorliegen, also beispielsweise auf einer Oberfläche davon vorliegen, und/oder im Material der Folie, z.B. des Aufklebers, enthalten sein, beispielsweise indem es bei der Herstellung der Folie, z.B. des Aufklebers, in das Ausgangsmaterial eingebracht wird. Gemäß bestimmten Ausführungsformen liegt das pyrolysierbare Duftstoffderivat zumindest auf einer Oberfläche der auftragbaren Folie, z.B. des Aufklebers, vor.

Die auftragbare Folie, z.B. der Aufkleber, kann mit einem geeigneten Haftmittel versehen sein, welches an die technische Einrichtung angepasst sein kann und ebenfalls nicht besonders beschränkt ist.

Gemäß bestimmten Ausführungsformen enthält die auftragbare Folie einen Teststreifen umfassend den zum pyrolysierbaren Duftstoffderivat entsprechenden Duftstoff, welcher beispielsweise durch einen Schutzstreifen vor Freisetzung geschützt ist. Der Teststreifen kann hierbei mit der auftragbaren Folie, z.B. einem Aufkleber, verbunden sein oder separat vorliegen. Ein entsprechender Teststreifen kann auch separat zu einer Lösung, einem Spray, und/oder einem Aerosol umfassend das pyrolysierbare Duftstoffderivat zugegeben werden. Der Teststreifen ist weiterhin nicht besonders beschränkt und kann als Geruchsprobe für den Anwender dienen. Auch können mehrere Teststreifen vorhanden sein, um mehreren Nutzern eine entsprechende Geruchsprobe zur Verfügung stellen zu können.

Mit einer Auftragung mit einer entsprechenden Lösung, einem Spray, einem Pulver und/oder einer auftragbaren Folie, beispielsweise einem Aufkleber, kann ein Anwender die technische Einrichtung, beispielsweise eine technische Anlage, selber nachträglich, auch wiederholt, nach Installation oder Erwerb mit einem entsprechenden olfaktorischen Warnsignal gegen Überhitzung durch pyrolysierbare Duftstoffderivate versehen, vorzugsweise mit einem Spray im Handformat und/oder einem Aufkleber.

Die technische Einrichtung oder ein Bestandteil davon ist nicht besonders beschränkt und umfasst sowohl die technischen Einrichtungen als Gesamtheit wie auch Teile davon, etwa Bauteile, aber auch Hilfsmittel, welche als Bestandteil davon zum Funktionieren der technischen Einrichtung beitragen, etwa Schmiermittel wie Schmieröl, Pumpenflüssigkeiten, etc. Gemäß bestimmten Ausführungsformen ist die technische Einrichtung oder ein Bestandteil davon ausgewählt aus elektrischen Anlagen oder Bauteilen davon, beispielsweise Kabeln, Kabelschächten, Spulenwicklungen, Motor-, Generator- und/oder Transformatorwicklungen; Achslagern, Leitungen für Flüssigkeiten, insbesondere gefährliche Flüssigkeiten; Behältnissen umfassend leicht entzündliche und/oder explosive Stoffe; medizinische Geräten; IT-Anlagen wie Servern; Anlagen in Luft- und/oder Raumfahrt oder in anderen Personentransportmitteln; Elektronik im häuslichen Bereich und/oder Alltag wie Akkumulatoren, beispielsweise in Handys, Laptops oder Tablets, insbesondere Lithiumakkumulatoren; und/oder Schmiermitteln. Gemäß bestimmten Ausführungsformen ist die technische Einrichtung oder ein Bestandteil davon ausgewählt aus technischen Einrichtungen oder Bauteilen davon, also Teilen, aus denen die technische Einrichtung zusammengefügt werden kann.

Beispielsweise kann das pyrolysierbare Duftstoffderivat durch Sprühen einer Lösung oder als Staub aufgebracht werden, oder vor Installation auf Bestandteile, z.B. Bauteile, einer technischen Einrichtung, beispielsweise Kabel, Spulenwicklungen, Schmiermittel, etc. aufgebracht werden, um bei Überhitzung derselben durch innere (z.B. Stromfluss, exotherme Reaktion und/oder Reibung) oder äußere Einflüsse (z.B. Wärmestrahlung, Konvektion heißer Gase, Kontakt mit heißen Gegenständen) ein olfaktorisches Warnsignal zu geben, um eine Beschädigung der technischen Einrichtung verhindern zu können, oder die durch deren Ausfall zu erwartenden Folgeschäden oder -kosten zu verringern oder zu verhindern.

Gemäß bestimmten Ausführungsformen ist die technische Einrichtung eine elektrische Anlage oder ein Bauteil davon, und/oder eine technische Einrichtung, bei der eigene Kosten besonders hoch sind, für deren Ausfall die Folgekosten besonders hoch wären, und/oder deren Ausfall mit besonderen Gefahren verbunden ist, beispielsweise Kabelschächte, Motor-, Generator- oder Transformatorwicklungen, kritische Achslager, Leitungen für gefährliche Flüssigkeiten, Behältnisse leicht entzündlicher oder explosiver Stoffe, lebenswichtige medizinische Geräte, kritischen IT-Anlagen wie Server, elektrische Anlagen in Luft- und Raumfahrt oder in anderen Personentransportmitteln, brandgefährdete Elektronik im häuslichen Bereich und Alltag wie Akkumulatoren in Handys, Laptops oder Tablets, z.B. Lithiumakkumulatoren.

Gemäß bestimmten Ausführungsformen wird das pyrolysierbare Duftstoffderivat zusammen mit einem Hilfsstoff aufgebracht, der eine enzymatische Spaltung oder einen Abbau durch Mikroorganismen der pyrolysierbaren Duftstoffderivate hemmt oder verhindert, beispielsweise Parabene (Ester der para-Hydroxybenzoesäure). In einem weiteren Aspekt betrifft die vorliegende Erfindung die Verwendung eines Kits, umfassend eine Lösung, ein Spray, ein Aerosol, ein Pulver oder eine auftragbare Folie, welches oder welche ein pyrolysierbares Duftstoffderivat umfasst, bevorzugt wobei das pyrolysierbare Duftstoffderivat ausgewählt ist aus der Gruppe, bestehend aus einem Glykosid, N-Glykosid, Thioglykosid, Ester, Thioester, Ether, Thioether, Amid, Acetal, Halbacetal oder Carbamat, bevorzugt wobei das pyrolysierbare Duftstoffderivat ausgewählt ist aus Mono- und/oder Oligo-Glykosiden, weiter bevorzugt Glukosiden, insbesondere wobei das pyrolysierbare Duftstoffderivat Sotolonglukosid umfasst; und
optional eine Geruchsprobe umfassend den zum pyrolysierbaren Duftstoffderivat entsprechenden Duftstoff in einem erfindungsgemäßen Verfahren.

Das Kit findet also in dem erfindungsgemäßen Verfahren Anwendung. Insofern kann das Kit beispielsweise als Spraydose, beispielsweise im Handformat, als Flüssigkeit, als Feststoff, beispielsweise in einem geeigneten Behälter, vorgesehen sein.

Gemäß bestimmten Ausführungsformen umfasst das Kit den freien Duftstoff als Muster des Warngeruches, beispielsweise separat verpackt, als Geruchsprobe, z.B. als Teststreifen. So das Kit als auftragbare Folie vorgesehen ist, z.B. als Aufkleber, kann diese bzw. dieser optional eine nach Aufbringung abziehbare Schutzfolie umfassen und/oder eine separate oder mit der Folie, z.B. dem Aufkleber, verbundene Geruchsprobe, beispielsweise einen Teststreifen mit dem freien, nicht gebundenen Duftstoff, die bzw. der beispielsweise durch einen Schutzstreifen geschützt sein kann. Entsprechende Ausführungen zu einer Lösung, einem Pulver, einem Aerosol, einem Spray und einer auftragbaren Folie sowie Ausgestaltungen dazu können auch der Beschreibung zum erfindungsgemäßen Verfahren zum Versehen einer technischen Einrichtung mit einem Warnsignal gegenüber Erhitzung entnommen werden.

In noch einem weiteren Aspekt betrifft die vorliegende Erfindung Sotolonglukosid, insbesondere Sotolon-β-D-glukosid der allgemeinen chemischen Formel I. Das Sotolonglukosid ist jedoch nicht auf Sotolon-β-D-glukosid, sondern umfasst beispielsweise auch Sotolon-α-D-glukosid, welches durch einfache Umwandlung gewonnen werden kann.

Das Sotolonglukosid umfasst hierbei Anomere wie auch Diastereomere in Reinform, beispielsweise sowohl das Anomer Sotolon-ß-D-glukosid, also ein Diastereomergemisch gewonnen aus razemischem Sotolon, wie auch die zwei Diastereomeren R- / S-Sotolon-ß-D-glukosid in Reinform oder im Wesentlichen als Reinform, so wie sie aus den jeweiligen Enantiomeren R- und S-Sotolon synthetisiert werden können. In der allgemeinen chemischen Strukturformel I von Sotolon-ß-D-glukosid ist entsprechend auch keine Diastereochemie der 4-Methylgruppe gezeigt, es kann sowohl das eine wie auch das andere Diastereomer erhalten werden wie auch ein Gemisch beider.

Das Sotolon selbst zeichnet sich durch einen niedrigen Geruchsschwellwert aus. Ebenso offenbart ist die Verwendung von Sotolonglukosid als pyrolysierbares Duftstoffderivat, dessen Verwendung als auftragbares Mittel mit Warnwirkung gegenüber Erhitzung, z.B. über 110°C, z.B. mehr als 120°C, beispielsweise 130°C oder mehr, 140°C oder mehr, 150°C oder mehr, oder 160°C oder mehr, sowie dessen Verwendung im erfindungsgemäßen Verfahren zum Versehen einer technischen Einrichtung mit einem Warnsignal gegenüber Erhitzung.

Ebenfalls offenbart ist ein Verfahren zur Herstellung von Sotolonglukosid, bei dem Sotolon mit einer geeigneten Glykosyltransferase, beispielsweise einer aus dem Wein stammenden Glykosyltransferase, in einer Biotransformation, z.B. durch *Escherichia coli,* mit UDP-Glukose, beispielsweise mit zelleigener UDP-Glukose, umgesetzt wird.

Die obigen Ausführungsformen, Ausgestaltungen und Weiterbildungen lassen sich, sofern sinnvoll, beliebig miteinander kombinieren. Weitere mögliche Ausgestaltungen, Weiterbildungen und Implementierungen der Erfindung umfassen auch nicht explizit genannte Kombinationen von zuvor oder im Folgenden bezüglich der Ausführungsbeispiele beschriebenen Merkmalen der Erfindung. Insbesondere wird der Fachmann auch Einzelaspekte als Verbesserungen oder Ergänzungen zu der jeweiligen Grundform der vorliegenden Erfindung hinzufügen.

Die Erfindung wird im Anschluss mit Bezug auf verschiedene Beispiele davon weiter im Detail erläutert. Die Erfindung ist jedoch nicht auf diese Beispiele beschränkt.

### Beispiele

### Synthesebeispiel 1: Herstellung von Sotolonglukosid

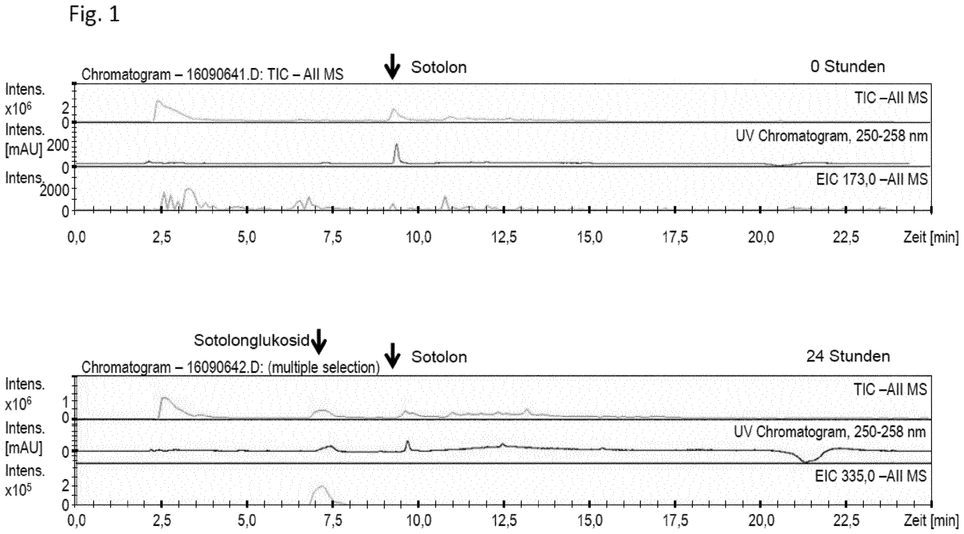

In einem Beispiel wurde mit der aus Wein *(Vitis vinifera)* stammenden Glykosyltransferase VvdGT13 mit der SEQ ID No. 1 eine Glukosylierung von Sotolon zu Sotolonglukosid als Biotransformation in *E. coli* BL21 (DE3) pLysS (Novagen, Schwalbach, Germany) mit dem VvdGT13-Gen in einem Expressionsvektor durchgeführt. Vorkulturen wurden über Nacht bei 37°C in Luria Bertani (LB)-Medium mit 100 µg/mL Ampizillin und 23 µg/mL Chloramphenikol angezogen. Am nächsten Tag wurde 50 mL LB-Medium mit den genannten Antibiotika mit 1 mL der Vorkultur angeimpft und bei 37°C und 160 rpm angezogen bis eine OD600 (optische Dichte bei 600 nm) von 0.6-0.8 erreicht wurde. Die Kultur wurde bei 16°C weitergeführt und zur Induktion mit 1 mM IPTG (Isopropyl-β-D-thiogalactopyranosid) versetzt. Nach 6 Stunden wurden 20 µL des Substrates Sotolon (razemisch, >= 97%, Sigma-Aldrich, Darmstadt, Germany) zugegeben. In regelmäßigen Zeitabständen wurde eine Probe von 200 µL der Kultur entnommen, zur Entfernung der Zellen abzentrifugiert, und für eine LC-MS-Analyse, wie nachfolgend beschrieben, 1:50 verdünnt. Die mit der Zeit fortschreitende Biotransformation von Sotolon zu Sotolonglukosid ist in Figur 1 dargestellt. Fig. 1 zeigt die Biotransformation von razemischem Sotolon zu Sotolon-β-D-glukosid (Diastereomere) mit der Glykosyltransferase VvdGT13 in *E.coli.* Gezeigt ist die Analyse des Kulturüberstandes mittels LC-MS zum Zeitpunkt 0 (obere drei Spektren) und nach einem Tag (untere drei Spektren). Die Spektren zeigen hierbei jeweils: oben: TIC *total ion current, negative mode,* mittig: UV 250-258 nm, unten: EIC *extracted ion current, negative mode.* Es ergibt sich: EIC oben 173 Dalton (Mol.gew. Sotolon 128, -1 (Protonenabspaltung), + 46 (da HCOOH-Addukt); EIC unten 335 Dalton (Mol.gew. Sotolonglukosid 290, -1 (Protonenabspaltung), + 46 (da HCOOH-Addukt). Etwa die Hälfte des Substrates war in diesem Versuch nach einem Tag umgesetzt.

Bei langen Synthesezeiten kam es zu vollständigem Umsatz, was bei Einsatz des Razemats beweist, dass beide Enantiomere R- und S-Sotolon auf diesem Wege zum Glukosid umgesetzt werden können.

### Analysebeispiel 1: LC-MS Analyse von Sotolonglukosid

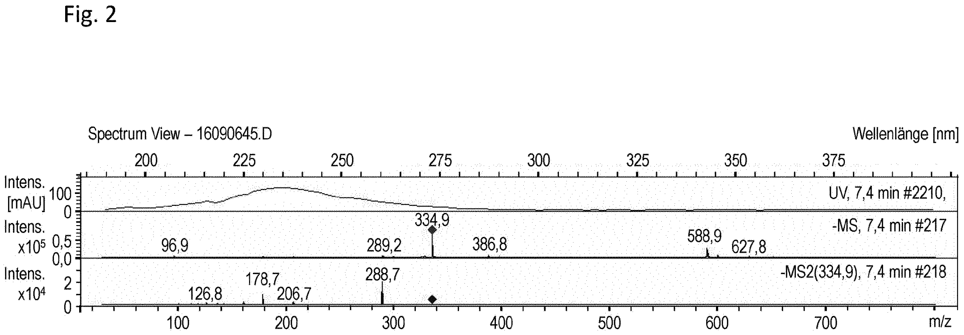

Das im Synthesebeispiel 1 produzierte Sotolonglukosid wurde massenspektroskopisch im Rahmen der synthesebegleitenden Analytik identifiziert und charakterisiert. Das verwendete HPLC-System bestand aus einer Vierfachpumpe und einem variablen Wellenlängendetektor, beides von Agilent 1100 (Bruker Daltonics, Bremen, Germany). Es wurde eine LUNA C18 100A 150 x 2 mm Säule benutzt (Phenomenex, Aschaffenburg, Germany). Die HPLC wurde durchgeführt mit dem folgenden binären Gradientensystem: Lösung A, Wasser mit 0.1 % Ameisensäure und Lösung B, 100% Methanol mit 0.1 % Ameisensäure. Als Gradientenprogramm wurde verwendet: 0-3 min, 90 % A/10 % B nach 50 % A/50 % B; 3-6 min, 50 % A/50 % B nach 100 % B, konstant für 8 min; 14-14.1 min, 100 % B nach 90 % A/10 % B, für 11 min. Die Flussrate war 0.2 ml/min. An die HPLC gekoppelt war ein Bruker esquire 3000plus Massenspektrometer mit einem ESI Interface, um die Massenspektren aufzunehmen. Die Ionisierungsspannung der Kapillare betrug 4000 V und die Endplatte wurde auf -500 V gesetzt. Das über seine Masse (als Ameisensäureaddukt), seine Laufzeitverschiebung auf der RP-Säule in Relation zum unglukosylierten Sotolon sowie seine ähnliche UV-Absorption identifizierte Sotolonglukosid wurde durch sein Massenspektrum MS und MS2 weiterhin bestätigt und näher charakterisiert, wie in Figur 2 gezeigt. Fig. 2 zeigt hierbei das UV-Spektrum (oben), -MS (Mitte) und -MS2 (unten) von Sotolon-β-D-glukosid im beschriebenen LC-MS-System.

-MS zeigt hierbei das Molekülionen-Signal von Sotolonglukosid als deprotoniertes HCOOH-Addukt bei 334.9 Dalton., und -MS2 das deprotonierte Sotolonglukosid mit der Masse 288.7 Dalton und abgespaltenem Sotolonanion-Fragment mit der Masse 126.8 Dalton.

### Analysebeispiel 2: Analyse der enzymatischen Spaltung von Sotolon-β-D-Glukosid

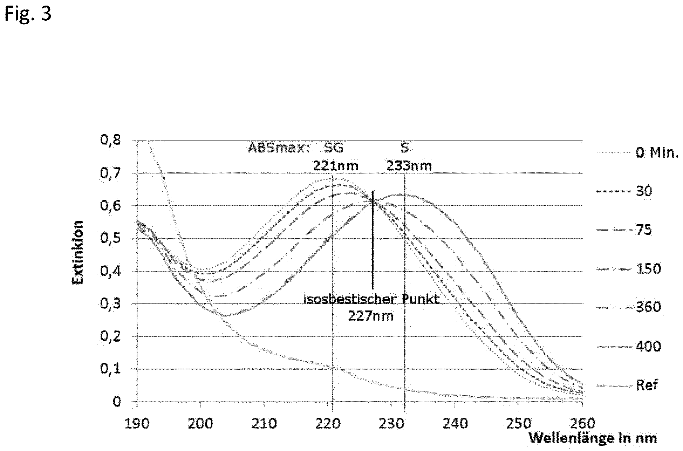

Um die enzymatische Spaltung von Sotolon-β-D-Glukosid zu analysieren, wurde eine Lösung mit 50 mg/L Sotolon-Glukosid-Extrakt mit Rapidase® AR2000 (enthält β-Glykosidase; Anwendungskonzentration: 0,1 mg/ml) umgesetzt. Der Reaktionsverlauf ist in Fig. 3, einem Diagramm zeitlich aufeinanderfolgender Spektren, aufgenommen mit einem Jenway 7315 Spectrophotometer, dargestellt. Fig. 3 zeigt hier den Reaktionsverlauf der enzymkatalysierten Hydrolyse von Sotolon-β-D-Glukosid (SG) zu Sotolon (S) wobei in den angegebenen Zeitabständen UV-Spektren von 190 bis 260nm aufgenommen wurden. Gezeigt sind auch die Absorptionsmaxima ABSmax der beiden Substanzen.

Es findet bei der Spaltung von Sotolon-β-D-Glukosid zu Sotolon eine leichte Verschiebung und Absenkung des Absorptionsmaximums statt. Es wird zudem ein isosbestischer Punkt beobachtet, welcher den Punkt bezeichnet, in dem sich alle Graphen aufgrund des dort gleichen Extinktionskoeffizienten schneiden). Er ist ein Beweis für die direkte Umwandlung von Edukt in Produkt, wie es bei einer Hydrolyse eines Glukosids zu erwarten ist. Er wäre nicht vorhanden, wenn Zwischenprodukte entstehen oder das Produkt weiter abgebaut werden würde; diese besäßen mit hoher Wahrscheinlichkeit bei dieser Wellenlänge andere Extinktionskoeffizienten, so dass die Summe der Extinktionen nicht konstant wäre. Die Analyseergebnisse sind also mit dem Vorliegen eines einfachen Glukosids und dessen Spaltung konform.

### Analysebeispiel 3: NMR-Spektrum von Sotolon-β-D-Glukosid

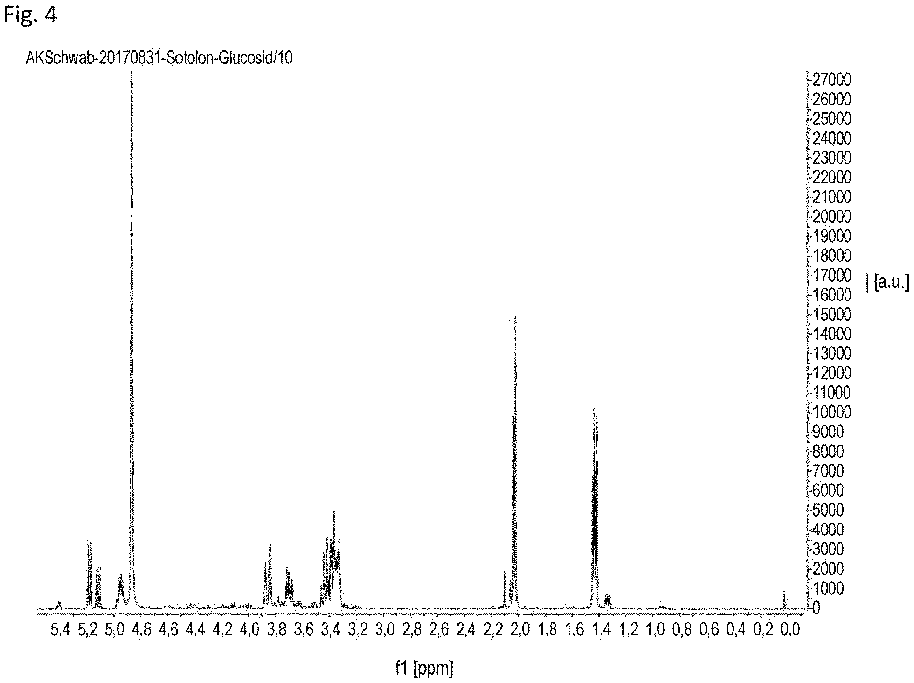

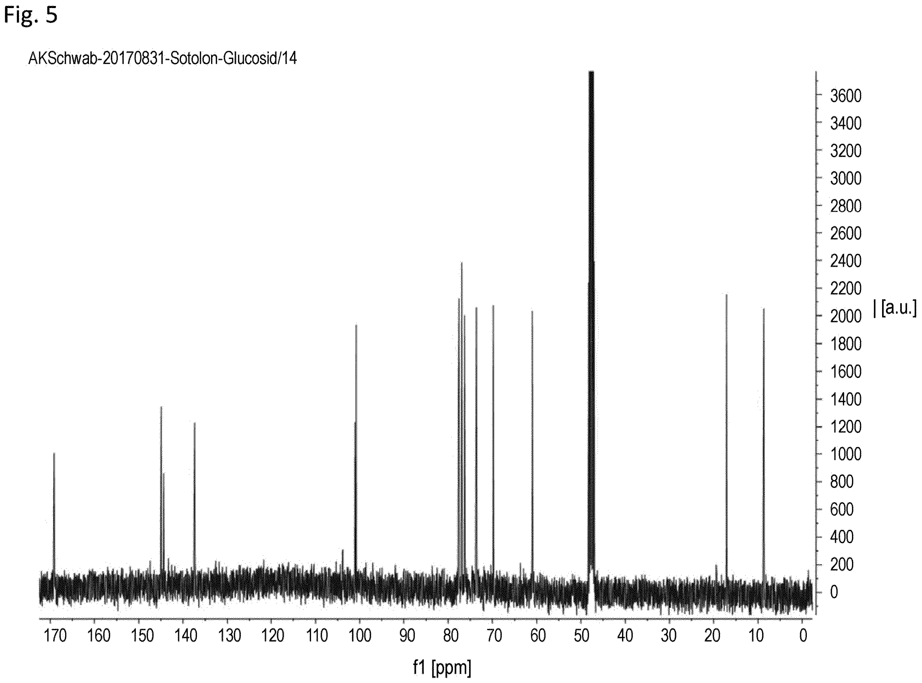

Weiterhin wurde eine NMR-spektroskopische Untersuchung des hergestellten Sotolon-β-D-Glukosids (30 mg Sotolon-β-D-Glukosid in 600 µL deuteriertem MeOHd4 + 0,03% TMS) mit einem Bruker DRX 500 bei 500, 13 MHz vorgenommen. Entsprechende H- und C-NMR-Spektren finden sich in Figuren 4 und 5.

Es ergaben sich die folgenden, in Tabellen 1 und 2 angegebenen Peaks, welche dem Sotolon-β-D-Glukosid zugeordnet werden konnten. Die Identifizierung insbesondere im H-NMR erfolgte hierbei zum Teil auch über 2D 1H/13 C NMR-Spektren (Daten nicht gezeigt).

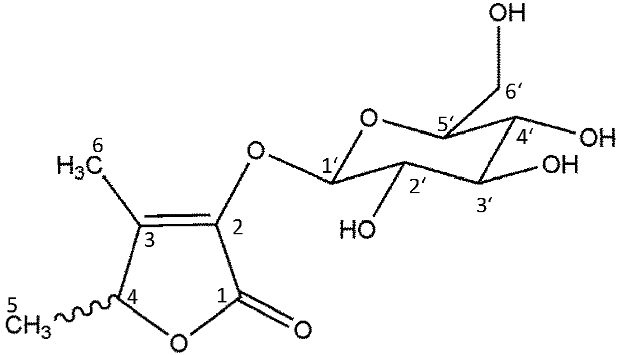

**Tabelle 1: ¹H NMR-Peaks von Sotolon-β-D-Glukosid**

| Sotolon | ppm chem. Verschiebung |
|---|---|
| H an chiralem C4 | 4,92-4,97 |
| 3 H an C5 (Methylgruppe) | 2,02-2,10 |
| 3 H an C6 (Methylgruppe) | 1,42; 1,43; 1,44; 1,45 |
| Glukose | |
| H an anomerem C1' | 5,11; 5,13; 5,17; 5,19 |
| H an C2' | 3,37 |
| H an C3' | 3,43 |
| H an C4' | 3,38 |
| H an C5' | 3,34 |
| 2 H an C6' | 3,80-3,90; 3,65-3,75 |

**Tabelle 2: ¹³C NMR-Peaks von Sotolon-β-D-Glukosid**

| Sotolon | ppm chem. Verschiebung |
|---|---|
| C1 (Lacton-C) | 169,14; 169,23 |
| C2 (Enol-C) | 144,41; 144,94 |
| C3 (Alken-C) | 137,37; 137,45 |
| C4 (Alkohol-C, lactonisiert, chiral) | 76,94; 77,57 |
| C5 (Methylgruppe an C4) | 8,70; 8,78 |
| C6 (Methylgruppe an C3) | 17,14; 17,17 |
| Glukose | |
| C1' (anomeres Glykosid-C) | 100,81; 101,08 |
| C2' | 73,58; 73,62 |
| C3' | 76,29; 76,31 |
| C4' | 69,77; 69,80 |
| C5' | 76,92 |
| C6' | 61,03 |

### Beispiel 1: Pyrolyse im Heizofen

In einem ersten Beispiel werden 5 mg Sotolonglukosid in einem exakt temperierbaren Heizofen mit Ablufteinrichtung sukzessive erhitzt. In einem 20 qm Laborraum wird mit steigender Temperatur der Sotolon-Geruch (Geruchsstoff des Liebstöckels, *Levisticum officinale,* "Maggikraut-Geruch"), wie in Tabelle 3 angegeben, wahrnehmbar (Tab. 3).

**Tabelle 3: Sotolon-Geruchswahrnehmung durch einen Menschen, hier einen Erfinder, bei schrittweiser Erhitzung von Sotolonglukosid durch einen in einem geschlossen Raum aufgestellten Heizofen.**

| Temperatur des Heizofens | Wahrnehmung im Laborraum |
|---|---|
| 120°C - Vorinkubation noch ohne Probe | - |
| 130°C | leichter Sotolon-Geruch |
| 160°C | Sotolon-Geruch |
| 170°C | deutlicher Sotolon-Geruch |
| ab 190°C | nicht weiter zunehmend: vollständige Pyrolyse ist erfolgt |

### Beispiel 2: Äußere Erhitzung eines beschichteten Kabels durch Konvektion heißer Luft

In einem zweiten Beispiel wurde ein dreiadriges, für 230V-50Hz ausgelegtes Kabel mit 1 mg Sotolonglukosid in methanolischer Lösung beschichtet und getrocknet. Im heißen Luftstrom einer Heißluftpistole, mit der je nach Einwirkdauer Temperaturen über 200°C erreicht werden können, wird innerhalb von Sekunden im ganzen Raum ein starker Sotolongeruch wahrnehmbar, nachdem im vorherigen kalten Zustand kein solcher Geruch wahrnehmbar war. Am Kabel sind dabei noch keine Veränderungen der Oberfläche des Isoliermaterials sichtbar, es ist noch unbeschädigt. Die äußere Erhitzung des mit Sotolonglukosid beschichteten Kabels durch Konvektion heißer Luft setzt den Warnstoff Sotolon frei.

### Beispiel 3: Äußere Erhitzung eines beschichteten Kabels durch Wärmeeinstrahlung

In einem anderen, dritten Beispiel wurde ein dreiadriges, für 230V-50Hz ausgelegtes Kabel mit 1 mg Sotolonglukosid in methanolischer Lösung beschichtet und getrocknet. Unter der Wärmeeinstrahlung einer Warmlichtlampe (200 W) wird nach 15 Minuten im ganzen Raum ein starker Sotolongeruch wahrnehmbar, nachdem im vorherigen kalten Zustand kein solcher Geruch wahrnehmbar war. Am Kabel sind dabei noch keine Veränderungen der Oberfläche des Isoliermaterials sichtbar, es ist noch unbeschädigt.

### Beispiel 4: Überlastung einer elektrischen Wicklung

In einem vierten Beispiel wurde die Wicklung eines Lüftermotors (Betriebswerte: 12 V, 0,19 A; Herstellerangaben) bei 24 V angelegter Spannung mit 2,5 mg Sotolonglukosid in methanolischer Lösung beschichtet. Nach Abtrocknung wurde ein einer Überlastung entsprechender Stromfluss durch die Wicklung gegeben. Warngeruchentwicklung, Wärmeabstrahlung, elektrische Funktionsfähigkeit und äußerlich sichtbarer Zustand wurden im Zeitverlauf beobachtet.

Eine Überlastung der elektrischen Wicklungen des Lüftermotors erfolgte bei 24 V angelegter Spannung. Bei einer Wahrnehmung des Warngeruches von Sotolon im Raum nach 10 Minuten Betrieb unter Überlastung ist der Motor noch funktionsfähig und äußerlich unverändert, aber der Innenteil des Gerätes mit der Achse ist überhitzt und mit der bloßen Hand schon nicht mehr berührbar. Der Versuch wurde nach 1,5 Stunden und starker Überhitzung des Geräts vor dem Durchbrennen der Spulen abgebrochen.

Technische Einrichtung, die durch Überhitzungen gefährdet sind wie vor allem elektrische Anlagen, aber beispielsweise auch Achslager und Treibstoffleitungen, können entweder gezielt über entsprechend präparierte Bauteile, oder durch flächige und nach der Installation oder Erwerb aufgebrachte pyrolysierbare Duftstoffderivate komplett mit einem Überhitzungsschutz durch olfaktorisches Signal geschützt werden. Dies erweitert bisherige Schutzmaßnahmen wie Thermofühler, die mit Abschaltung der Einrichtungen sowie akustischen und optischen Signalen arbeiten, um eine neue Qualität und vielfältige Anwendungsoptionen.

## Patentansprüche

1. Verfahren zum Versehen einer technischen Einrichtung mit einem Warnsignal gegenüber Erhitzung, wobei ein pyrolysierbares Duftstoffderivat auf die technische Einrichtung oder Bestandteile davon aufgebracht oder eingebracht wird.

2. Verfahren nach Anspruch 1, wobei das pyrolysierbare Duftstoffderivat ab einer Temperatur von mehr als 120°C, bevorzugt 150°C oder mehr, pyrolysierbar ist.

3. Verfahren nach Anspruch 1 oder 2, wobei das pyrolysierbare Duftstoffderivat ausgewählt ist aus der Gruppe, bestehend aus Mono- und/oder Oligosacchariden, Estern, Thioestern, Ethern, Thioethern, Amiden, Acetalen, Halbacetalen und Carbamaten und/oder Derivaten davon, bevorzugt einem Glykosid, N-Glykosid, Thioglykosid, Ester, Thioester, Ether, Thioether, Amid, Acetal, Halbacetal oder Carbamat, und/oder Derivaten davon, bevorzugt wobei das pyrolysierbare Duftstoffderivat ausgewählt ist aus Mono- und/oder Oligo-Glykosiden und/oder Derivaten davon, weiter bevorzugt Glukosiden und/oder Derivaten davon, noch weiter bevorzugt Glukosiden, insbesondere wobei das pyrolysierbare Duftstoffderivat Sotolonglukosid umfasst.

4. Verfahren nach Anspruch 3, wobei das pyrolysierbare Duftstoffderivat ausgewählt ist aus Glykosiden, insbesondere Glukosiden, von Sotolon, Maltol, Ethylmaltol, Furaneol, Homofuraneol, Norfuraneol, Eugenol, Terpineol, Thioterpineol, Thymol, 1-Octen-3-ol, und/oder 2-Furfurylthiol, und/oder ausgewählt ist aus Glykosiden, insbesondere Glukosiden, von Raucharomen, wobei die Raucharomen bevorzugt ausgewählt sind aus Phenol, 2-Methylphenol, Hydrochinon, 2,6-Dimethoxyphenol, 2,6-Dimethoxy-4-methylphenol, o-, m-, und p-Kresol, 2-Methoxyphenol, 2-Methoxy-4-vinylphenol, 4-Ethyl-2-methoxyphenol, 4- und 5-Methyl-2-methoxyphenol, und/oder 2- und/oder 4-Methylphenol.

5. Verfahren nach einem der vorigen Ansprüche, wobei das pyrolysierbare Duftstoffderivat als Aerosol, Spray, in Lösung oder in Pulverform aufgebracht oder eingebracht wird, bevorzugt wobei das pyrolysierbare Duftstoffderivat als Aerosol, Spray oder in Lösung aufgebracht oder eingebracht wird, wobei als Lösungsmittel bevorzugt Ethanol, Ethylacetat, Methanol, Aceton, Dimethylsulfoxid, Dimethylformamid, Ethylenglykolmonomethylether, Isopropanol, oder eine Mischung davon verwendet wird.

6. Verfahren nach einem der Ansprüche 1 bis 4, wobei das pyrolysierbare Duftstoffderivat mit einer auftragbaren Folie, bevorzugt einem Aufkleber, optional mit einer nach Aufbringung abziehbarer Schutzfolie, aufgebracht wird, weiter bevorzugt wobei die auftragbare Folie einen Teststreifen umfassend den zum pyrolysierbaren Duftstoffderivat entsprechenden Duftstoff enthält, welcher durch einen Schutzstreifen vor Freisetzung geschützt ist.

7. Verfahren nach einem der vorigen Ansprüche, wobei die technische Einrichtung oder ein Bestandteil davon ausgewählt ist aus elektrischen Anlagen oder Bauteilen davon, beispielsweise Kabeln, Kabelschächten, Spulenwicklungen, Motor-, Generator- und/oder Transformatorwicklungen; Achslagern, Leitungen für Flüssigkeiten, insbesondere gefährliche Flüssigkeiten; Behältnissen umfassend leicht entzündliche und/oder explosive Stoffe; medizinische Geräten; IT-Anlagen wie Servern; Anlagen in Luft- und/oder Raumfahrt oder in anderen Personentransportmitteln; Elektronik im häuslichen Bereich und/oder Alltag wie Akkumulatoren, beispielsweise in Handys, Laptops oder Tablets, insbesondere Lithiumakkumulatoren; und/oder Schmiermitteln.

8. Verfahren nach einem der vorigen Ansprüche, wobei das pyrolysierbare Duftstoffderivat zusammen mit einem Hilfsstoff aufgebracht wird, der eine enzymatische Spaltung oder einen Abbau durch Mikroorganismen der pyrolysierbaren Duftstoffderivate hemmt oder verhindert.

9. Verwendung eines Kits, umfassend eine Lösung, ein Spray, ein Aerosol, ein Pulver oder eine auftragbare Folie, welches oder welche ein pyrolysierbares Duftstoffderivat umfasst, bevorzugt wobei das pyrolysierbare Duftstoffderivat ausgewählt ist aus der Gruppe, bestehend aus einem Glykosid, N-Glykosid, Thioglykosid, Ester, Thioester, Ether, Thioether, Amid, Acetal, Halbacetal oder Carbamat, bevorzugt wobei das pyrolysierbare Duftstoffderivat ausgewählt ist aus Mono- und/oder Oligo-Glykosiden, weiter bevorzugt Glukosiden, insbesondere wobei das pyrolysierbare Duftstoffderivat Sotolonglukosid umfasst; und
optional eine Geruchsprobe umfassend den zum pyrolysierbaren Duftstoffderivat entsprechenden Duftstoff, in einem Verfahren gemäß einem der Ansprüche 1 bis 8.

10. Sotolonglukosid, insbesondere Sotolon-β-D-glukosid der allgemeinen chemischen Formel I

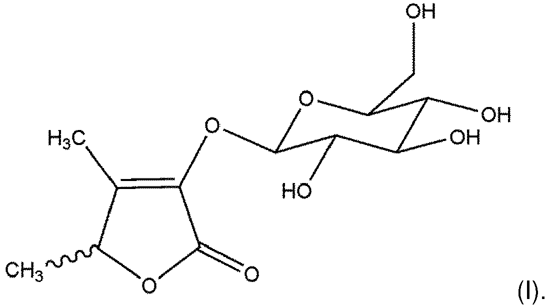

## Claims

1. Method for equipping a technical equipment with a warning signal for heating, wherein a pyrolyzable fragrance derivative is applied onto or into the technical equipment or components of it.

2. Method according to claim 1, wherein the pyrolyzable fragrance derivative can be pyrolyzed above a temperature of 120°C, preferable above 150°C or more.

3. Method according to claim 1 or 2 with the pyrolyzable fragrance derivative is chosen from the group consisting of mono- and/or oligosaccharides, esters, thioesters, ethers, thioethers, amides, acetals, hemiacetals and carbamates and/or derivatives thereof, preferably a glycoside, N-glycoside, thioglycoside, ester, thioester, ether, thioether, amide, acetal, hemiacetal, or carbamate, and/or derivatives thereof, preferably wherein the pyrolyzable fragrance derivative is chosen from mono- or oligoglycosides and/or derivatives thereof, more preferably glucosides and/or derivatives thereof, and most preferably glucosides, particularly wherein the pyrolyzable fragrance derivative comprises sotolon glucoside.

4. Method according to claim 3, wherein the pyrolyzable fragrance derivative is chosen from glycosides, especially glucosides, of sotolon, maltol, ethylmaltol, furaneol, homofuraneol, norfuraneol, eugenol, terpineol, thioterpineol, thymol, 1-octen-3-ol, and/or furfurylthiol, and/or is chosen from glycosides, especially glucosides, from smoky flavors, preferably chosen from phenol, 2-methylphenol, hydroquinone, 2,6-dimethoxyphenol, 2,6-dimethoxy-4-methylphenol, o-, m-, and p-cresol, 2-methoxyphenol, 2-methoxy-4-vinylphenol, 4-ethyl-2-methoxyphenol, 4- and 5-methyl-2-methoxyphenol, and/or 2- and/or 4-methylphenol.

5. Method according to one of the preceding claims, wherein the pyrolyzable fragrance derivative is applied or introduced as an aerosol, a spray, in solution or as a powder, preferably wherein the pyrolyzable fragrance derivative is applied or introduced as an aerosol, a spray, in solution, wherein as a solvent preferably ethanol, ethylacetate, methanol, acetone, dimethyl sulfoxide, dimethyl formamide, ethylene glycol monomethyl ether, isopropanol, or a mixture thereof is used.

6. Method according to one of claims 1 to 4, wherein the pyrolyzable fragrance derivative is applied with a fixable foil, preferably a sticker, optionally with a removable protective foil, further preferably wherein the fixable foil includes a test strip containing the fragrance which corresponds to the pyrolyzable fragrance derivative, which is prevented from release by a protective strip.

7. Method according to one of the preceding claims, wherein the technical equipment or a component thereof is chosen from electric devices or components thereof, e.g. cables, cable channels, coil windings, motor-, generator- and/or transformer coil winding; axle bearings, pipes for liquids, especially dangerous liquids; containers comprising highly flammable and/or explosive substances; medical devices; IT-devices like servers; devices in aviation and/or aerospace or other means of transportation of passengers; electronics in household and/or daily routine, like accumulators, e.g. in smartphones, laptops, or tablets, especially lithium accumulators; and/or lubricants.

8. Method according to one of the preceding claims, whrein the pyrolyzable fragrance derivative is applied with an additive which inhibits or prevents enzymatic cleavage of the pyrolyzable fragrance derivative or degradation by microorganisms.

9. Use of a kit comprising a solution, a spray, an aerosol, a powder or a fixable foil, which contains a pyrolyzable fragrance derivative, preferably wherein the pyrolyzable fragrance derivative is chosen from the group consisting of a glycoside, N-glycoside, thioglycoside, ester, thioester, ether, thioether, amid, acetal, hemiacetal, or carbamate, preferably wherein the pyrolyzable fragrance derivative is chosen from mono- and/or oligoglycosides, more preferably glucosides, particularly wherein the pyrolyzable fragrance derivative comprises sotolon glucoside; and optionally comprising an olfactory test comprising the fragrance corresponding to the pyrolyzable fragrance derivative, in a method according to one of claims 1 to 8.

10. Sotolon glucoside, particularly sotolon-β-D-glucoside of the general chemical formula (I)

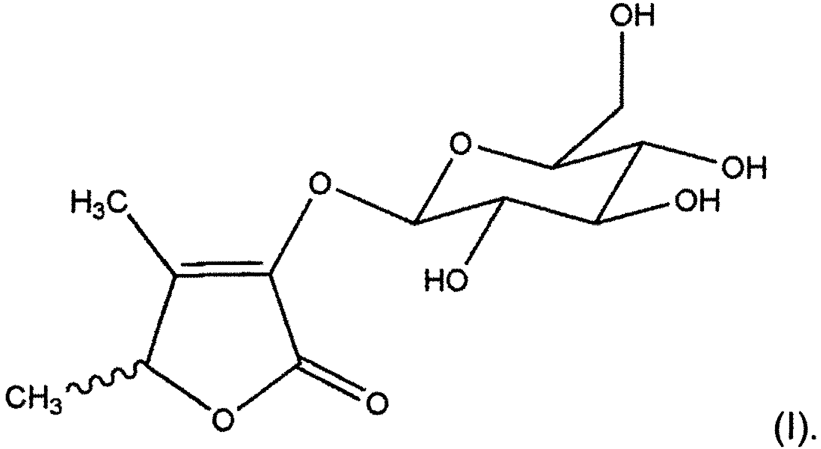

## Revendications

1. Procédure pour l'équipement d'une installation technique d'un signal d'avertissement contre le réchauffement, où un composé aromatique pyrolysable est appliqué sur ou introduit dans l'installation technique ou ses composants.

2. Procédure selon la revendication 1, où le composé aromatique pyrolysable est pyrolysable à partir d'une température supérieure à 120°C, de préférence supérieure à 150°C ou plus.

3. Procédure selon la revendication 1 ou 2, où le composé aromatique est sélectionné du groupe composé de mono- et/ou oligosaccharides, esters, thioesters, éthers, thioéthers, amides, acétals, hémiacétals et carbamates et/ou des dérivés de ces derniers, de préférence d'un glycoside, N-glycoside, ester, thioester, éther, thioéther, amide, acétal, hémiacétal ou carbamate, et/ou des dérivés de ces derniers, où le composé aromatique pyrolysable est de préférence sélectionné de mono- et/ou oligo-glycosides et/ou des dérivés de ces derniers ou encore de préférence de glucosides tout en particulier ceux où le composé aromatique pyrolysable contient du glucoside de sotolon.

4. Procédure selon la revendication 3, où le composé aromatique pyrolysable est sélectionné de glycosides, surtout de glucosides de sotolon, maltol, éthyl maltol, furanéol, homofuranéol, norfuranéol, eugénol, terpinéol, thioterpinéol, thymol, 1-0cten-3-ol, et/ou 2-furfurylthiol, et/ou sélectionné de glycosides, surtout de glucosides, d'arômes de fumée, où les arômes de fumée sont de préférence sélectionnés de phénol, 2-méthylphénol, hydroquinone, 2,6- diméthoxyphénol, 2,6-diméthoxy-4-méthylphénol, o-, m-, et p-crésol, 2- méthoxyphénol, 2-méthoxy-4-vinylphénol, 4-éthyl-2-méthoxyphénol, 4- et 5-méthyl- 2-méthoxyphénol, et/ou 2- et/ou 4-méthylphénol.

5. Procédure selon l'une des revendications précédentes, où le composé aromatique pyrolysable est appliqué ou introduit comme aérosol, spray, en solution ou en poudre, de préférence où le composé aromatique pyrolysable est appliqué ou introduit comme aérosol, spray ou en solution, où de préférence de l'éthanol, acétate d'éthyle, méthanol, acétone, diméthylsulfoxide, diméthylformamide, éther monométhylique d'éthylèneglycol, isopropanol, ou un mélange de ces derniers est employé comme solvant.

6. Procédure selon l'une des revendications 1 à 4, où le composé aromatique pyrolysable est appliqué par un film applicable, de préférence une étiquette, en option avec un film de protection détachable après l'application, et par ailleurs de préférence que le film applicable comporte une bandelette de test contenant la substance aromatique correspondant au composé aromatique pyrolysable qui est protégé contre la propagation par une bande protectrice.

7. Procédure selon l'une des revendications précédentes, où l'installation technique ou un composant de cette dernière est sélectionné d'installations électriques ou de composants de ces derniers, comme des câbles, conduites de câbles, enroulements de bobines, enroulements moteurs, de générateurs et/ou de transformateurs ; boîtes d'essieu, conduites de fluides, surtout de fluides dangereuses ; récipients contenant des substances facilement inflammables et/ou explosives ; dispositifs médicaux ; installations informatiques comme des serveurs ; installations aéronautiques et/ou spatiales et dans d'autres moyens de transport pour personnes ; dispositifs électroniques du foyer et/ou du quotidien comme des accumulateurs dans des portables, ordinateurs portables ou tablettes p. ex., surtout des accumulateurs au lithium ; et/ou des lubrifiants.

8. Procédure selon l'une des revendications précédentes, où le composé aromatique pyrolysable est appliqué ensemble avec un additif qui inhibe ou empêche la coupure enzymatique ou le clivage des composés aromatiques pyrolysables par des micro-organismes.

9. Emploi d'un kit qui contient une solution, spray, aérosol, poudre ou un film applicable lequel ou lesquels contient/contiennent un composé aromatique pyrolysable, de préférence où le composé aromatique pyrolysable est sélectionné du groupe composé d'un glycoside, N-glycoside, thioglycoside, ester, thioester, éther, thioéther, amide, acétal, hémiacétal ou carbamate, de préférence où le composé aromatique pyrolysable est sélectionné de
mono- et/ou oligo-glycosides, par ailleurs de préférence de glucosides surtout de ceux où le composé aromatique pyrolysable contient du glucoside de sotolon ; et
en option un échantillon olfactif qui contient la substance aromatique correspondant au composé aromatique pyrolysable dans une procédure selon l'une des revendications 1 à 8.

10. Glucoside de sotolon, surtout le β-D-glucoside de sotolon de la formule chimique générale 1.
